# EUROPÄISCHE PATENTANMELDUNG

(11) **EP 0 625 681 A1**
(43) Veröffentlichungstag der Anmeldung: **23.11.1994**
(21) Anmeldenummer: 93118504.5
(22) Anmeldetag: 16.11.1993
(51) Int. Cl.: F24J 3/00, B01F 15/06

(54) **Heizverfahren und Heizvorrichtung**

(30) Priorität: 18.05.1993 DE 4316615; 09.06.1993 DE 4319176
(71) Anmelder: Bormann, Wilhelm, D-21729 Freiburg (DE); Herdemerten, Klaus Dr., D-22359 Hamburg (DE)
(72) Erfinder: Bormann, Wilhelm, D-21729 Freiburg (DE)

(57) **Zusammenfassung**

Das Heizverfahren, insbesondere für Wohnungen, unter Verwendung einer aus Kunststoff und einem Stabilisator bestehenden pulver- oder granulatförmigen Mischung, die in einem Trockenmischer mit Luft verwirbelt wird, wobei die Außenwand des Mischers zur Ableitung von Wärme mit Wasser umspült wird, das in einem Heizkreislauf umläuft, besteht darin, daß als Stabilisator für die Kunststoff-Teilchen ein Mercaptid verwendet wird und/oder die Verwirbelung in einem sich über einen waagerechten Bereich erstreckenden Verwirbelungsstrecke liegenden Behälter erfolgt, das in einer Vorrichtung aus einem doppelwandigen Behälter (10) mit einer im Behälterinnenraum (23) angeordneten Verwirbelungseinrichtung aus einem Flügelmischer (20) durchgeführt wird, wobei im Zwischenraum der Doppelwandung (11,12) als Teil eines Heizkreislaufes Wasser geführt wird, und der vorzugsweise zylindrische Behälter liegend angeordnet ist und einen um eine horizontale Achse rotationsfähigen Flügelmischer (20) aufweist.

## Beschreibung

Die Erfindung betrifft ein Heizverfahren, insbesondere für Wohnungen, unter Verwendung einer aus einem Kunststoff und einem Stabilisator bestehenden pulver- oder granulatförmigen Mischung, die in einem Trockenmischer mit Luft verwirbelt wird, wobei die Außenwand des Mischers zur Ableitung von Wärme mit Wasser umspült wird, das in einem Heizkreislauf umläuft, und eine Vorrichtung zur Durchführung dieses Verfahrens, bestehend aus einem doppelwandigen Behälter mit einer im Behälterinnenraum angeordneten Verwirbelungseinrichtung, wobei im Zwischenraum der Doppelwandung als Teil eines Heizkreislaufes Wasser geführt wird.

Das durch die DE-A-35 00 821 bekannte Verfahren beruht darauf, daß PVC-Granulat oder -pulver beim Mischen eine Erwärmung erfährt, die am Kühlmantel eines Mischers abgenommen werden kann. Um ein verhältnismäßig geringes Temperaturgefälle zwischen dem eigentlichen Wärmeerzeuger - dem Mischer - und dem Wärmeverbraucher zu erzielen, wird vorgeschlagen, dem PVC-haltigen Material einen zinn-haltigen Stoff zuzugeben und diese Mischung mehrere Tage bis mehrere Wochen zu verwirbeln und die dabei aufgrund der Zusammensetzung entstehende Wärme abzuführen. Je nach Drehzahl des für die Verwirbelung benutzten Rührwerkes kann eine höhere oder geringere Wärme erzeugt werden. Als Wärmeerzeuger dient ein im wesentlichen zylindrisches Gefäß mit einem inneren Zylinderraum, der von einem Mantel umschlossen ist, um den herum im Abstand ein zweiter Mantel angeordnet ist, so daß in dem dazwischenliegenden Raum Wasser geführt werden kann. Am Boden des zylindrischen Gefäßes sind Mischflügel angeordnet, deren Achse unmittelbar von einem Motor angetrieben wird. Hierbei hat es sich jedoch gezeigt, daß nur im bodenseitigen Verwirbelungsbereich durch das eingesetzte Material eine Wärmeabgabe erfolgt und somit nur ein kleiner Wandbereich mit einem Kühlmantel zur Verfügung stand, um die erhaltene Wärme abnehmen und zu Heizzwecken einsetzen zu können. Hinzu kommt, daß die eingesetzte Menge an Material nicht groß sein konnte, da eine Materialverwirbelung nur im bodenseitigen Bereich des eingesetzten zylindrischen Mischers erfolgt, in dem die Mischeinrichtung angeordnet ist.

Es ist Aufgabe der vorliegenden Erfindung, das angegebene Verfahren und die Vorrichtung dahingehend zu verbessern, daß der Wirkungsgrad erhöht und die Einsatzzeit für das verwendete Kunststoff-Granulat pro eingesetzte Charge verlängert wird und daß auch anderweitige Kunststoffe eingesetzt werden können.

Diese Aufgabe wird durch das in den Ansprüchen 1 und 2 beschriebene Verfahren gelöst, wonach als Stabilisator ein Mercaptid eingesetzt wird und/oder die Verwirbelung in einem liegenden Behälter erfolgt. Gegenüber der in der DE-A-35 00 821 C2 angegebenen zinnhaltigen Verbindung besitzt das Mercaptid eine bessere Fähigkeit, die beim Rühren bzw. Verwirbeln entstandene Wärme an den Behältermantel abzugeben. Als weitere Alternative oder zusätzliche Maßnahme wird vorgeschlagen, den Mischbehälter nicht stehend, sondern liegend anzuordnen, wodurch sich die Energie minimieren läßt, die zu einer 100%igen Verwirbelung der im Behälter vorliegenden Kunststoffteile notwendig ist. Außerdem erfolgt durch den in dem Mischbehälter angeordneten und sich über den gesamten Mischbehälterinnenraum erstreckenden Flügelmischer eine Verwirbelung des Ausgangsmaterials im gesamten Behälterraum, so daß die erzeugte Wärme gleichmäßig an die gesamte, als Kühlmantel ausgebildete Behälterwandfläche abgegeben und abgenommen wird. Die Kühlmantelfläche ist somit insgesamt größer; der Wirkungsgrad wird somit verbessert.

Vorzugsweise wird als Mercaptid ein Octyl-Zinn-Mercaptid verwendet.

Nach einer weiteren Ausgestaltung der Erfindung wird die Verwirbelung in einem liegenden Trommelbehälter durchgeführt, in dem ein Flügelmischer relativ zur Trommelinnenbehälterwand rotiert. Ein Trommelbehälter hat den Vorteil, daß keine Nischen mit nur schwacher Verwirbelung entstehen können und die Durchmischung homogen über den gesamten Querschnitt durchgeführt werden kann. Vorzugsweise wird der Flügelmischer mit einer Drehzahl von 1.450 bis 2.900 U/min. betrieben.

Abgesehen davon, daß das erfindungsgemäße Verfahren abgasfrei betrieben werden kann, kann eine weitere Einsparung auch dadurch erzielt werden, daß z.B. PVC-haltiges Material aus Abfall- und Altmaterial in Form von gebrauchten Flaschen oder ähnlichem benutzt wird. Zweckmäßigerweise wird mit der Ableitung von Wärme die Temperatur des verwirbelten Materials auf ein 160^{o}C nicht überschreitendes Niveau begrenzt. Bevorzugt wird jedoch eine bei etwa 150^{o}C bis 160^{o}C liegende Begrenzungstemperatur. Hierdurch lassen sich Wärmeverluste vermeiden. Weiterhin soll der Zylinderraum zur Verwirbelung so gewählt werden, daß das Verhältnis des Durchmessers zur Länge etwa 5:8 bis etwa 5:10 bei einer Füllung, die etwa 40% bis 60% der Höhe einnimmt, ist.

Die Auswahl des Stabilisators ermöglicht auch andere Kunststoffe als Ausgangsmaterial einzusetzen als ausschließlich PVC, so daß das Verfahren auch die Verwertung andersartiger Kunststoffe ermöglicht. Es hat sich nämlich überasschend gezeigt, daß nur mit dem Einsatz eines Octyl-Zinn-Mercaptid sich auch andersartige Kunststoffe einsetzen lassen, wie z.B. Polyvinylacetate, Polypropylene, wobei es zweckmäßigerweise von Vorteil ist, wenn den andersartigen Kunststoffen z.B. ein Anteil bis zu 80 Gew.-% hinzugesetzt wird.

Die auf die Vorrichtung bezogene Aufgabe wird durch die in den Ansprüchen 10 und 11 beschriebene Vorrichtung gelöst, bei der erfindungsgemäß der vorzugsweise zylindrische Behälter liegend angeordnet ist und einen um eine horizontale Achse rotationsfähigen, sich über die ganze Behälterlänge erstreckenden und den gesamten Behälterinnenraum einnehmenden Flügelmischer aufweist. Hiermit kann praktisch über den gesamten Querschnitt der Behälterinnenraum zur Verwirbelung genutzt werden und nicht nur 90% wie bei dem stehenden Behälter nach der DE-A-35 00 821.

Weiterbildungen des Flügelmischers sind in den Unteransprüchen beschrieben. So ist der Flügelmischer vorzugsweise auf einer horizontal angeordneten, motorgetriebenen Welle befestigt, von der mehrere radial von der Welle abstehende Arme mit endseitigen Schaufelblechen abragen. Diese Schaufelbleche sind gegenüber den Armen um 30^{o} bzw. 60^{º}⁺ / + / - 15^{o} geneigt. Diese Neigung bewirkt ein schaufelartiges Fördern und Mischen der Inhaltsmenge.

Nach einer weiteren Ausgestaltung der Erfindung erstreckt sich jedes der Schaufelbleche im wesentlichen über die gesamte Innenraumlänge des Behälters und wird über mehrere vorzugsweise drei hintereinander angeordnete, radial von der Welle abstehende Arme gehalten. Hierdurch erfährt das Schaufelblech eine größtmögliche Stabilisierung bei maximiertem Wirkungsgrad über die gesamte Behälterinnenraumlänge. Bewährt hat es sich, wenn mindestens drei, vorzugsweise vier Schaufelbleche vorgesehen sind, jeweils in gleichem Winkelabstand von 120^{o} bzw. 90^{o}.

Ein Ausführungsbeispiel der Erfindung ist in den Zeichnungen dargestellt. Es zeigen
Fig. 1 eine Querschnittsansicht einer erfindungsgemäßen Vorrichtung,
Fig. 2 ein Ausschnitt einer Detailansicht II in Fig. 1,
Fig. 3 eine Stirnansicht des Flügelmischers und
Fig. 4 eine Seitenansicht des Flügelmischers.

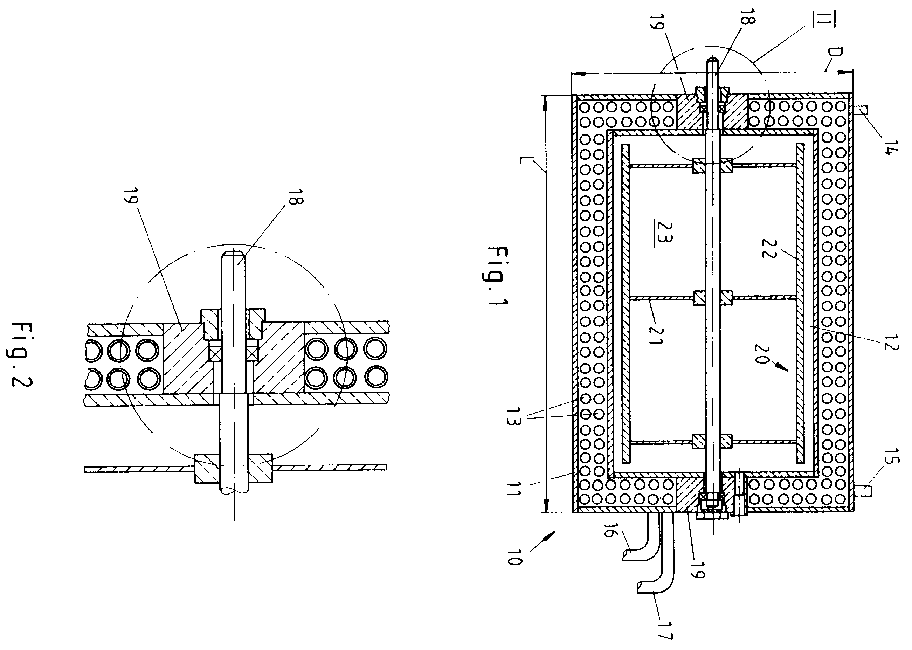

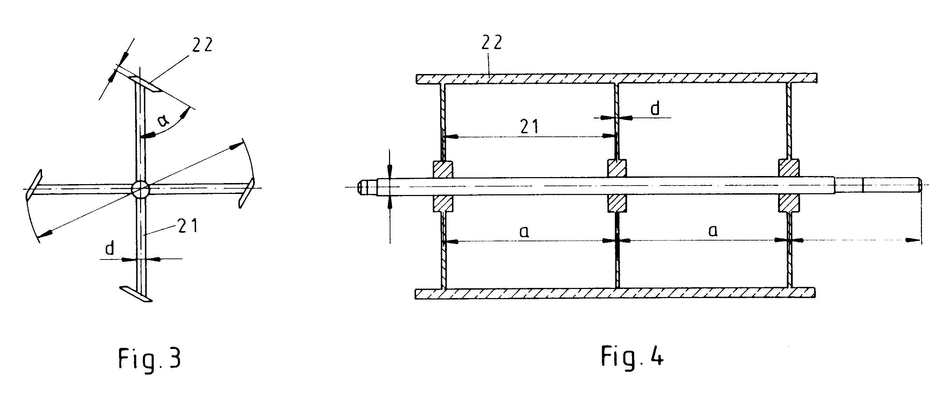

Der in Fig. 1 dargestellte Wärmeerzeuger besteht aus einem doppelwandigen Zylinderbehälter 10, der zwischen seinem Außenmantel 11 und seinem Innenmantel 12 einen Zwischenraum aufweist, in dem jeweilige Rohrschlangen 13 für Gebrauchs- und/oder Heizungswasser angeordnet sind. Der Heizungswasserzulauf ist mit 14 und der Ablauf mit 15 bezeichnet, während der Gebrauchswasserzulauf das Bezugszeichen 16 und der Gebrauchswasserablauf das Bezugszeichen 17 tragen. Der Zylinderaußenmantel 11 besitzt zweckmäßigerweise eine Länge l von 60 cm, während der Innenmantel eine um 10 cm kürzere Länge hat. Beide Behälter sind aus Kupfer-Blech gefertigt. Der Behälter 10 wird im Bereich seiner Längsachse von einer Welle 18 durchragt, die an der einen Seite mit einem nicht dargestellten Motor verbunden ist und in Lagerbuchsen 19 lagert. Die Welle 18 dient als Träger eines Flügelmischers 20, der sich im wesentlichen über die gesamte Innenraumlänge erstreckt. Dieser Flügelmischer 20 besitzt auf der Welle angeordnete Arme 21, die ( Fig.3) kreuzweise angeordnet sind. Jeder dieser Arme trägt an seinem äußeren Ende ein Schaufelblech 22, d.h. im Falle entsprechend Fig. 3 vier Schaufelbleche, die sich über die gesamte Innenraumlänge erstrecken und von denen jedes von jeweils drei Armen 21 gehalten wird. Die Schaufelbleche 22 sind um einen Winkel α = 30^{o} zur Achse eines Armes geneigt. Der Arm hat eine Dicke d von etwa 0,5 cm. Die Abstände a betragen ca. 20 cm.

Der Behälterinnenraum 23 wird mit einer Mischung eines Kunststoff-, z.B. eines PVC-Pulvers oder -Granulats mit einem Stabilisator aus Octyl-Zinn-Mercaptid zur Hälfte gefüllt. Aufgrund des horizontal liegend angeordneten Behälters 10 wird ein hoher Wirkungsgrad und ein hoher Energiegewinn erhalten. Durch die Verwirbelung der Füllung bei Drehung der Welle 18 laden sich die Kunststoffmoleküle auf; die durch die statische Aufladung erzielte Wärme wird an den Innenmantel 12 abgegeben, von wo aus sie an das Wasser in den Rohren 13 geführt wird. Es wird eine 100%ige Ausnutzung des PVC-Granulats in Wärme erreicht. Von besonderem Vorteil ist, daß durch den Einsatz des genannten Stabilisators das PVC-Granulat sich nicht erschöpft und Abbaureaktionen oder Agglomerationen der PVC-Teile, insbesondere durch das eingesetzte Mercaptid, vermieden werden, das sich als Schutzhülle um die Teilchen des PVC-Granulats legt und somit das PVC-Granulat für eine längere Lebensdauer stabilisiert. Mit dem erfindungsgemäßen Verfahren und der dargestellten Vorrichtung wird eine geringere Energie benötigt, als bei dem in der DE-A-35 00 821 C2 beschriebenen Verfahren. Das Verfahren ist umweltfreundlich und wirtschaftlich, insbesondere entstehen keine Abgase wie bei der Verbrennung fossiler Stoffe.

Anstelle eines PVC-Granulats kann auch ein Pulver bzw. Granulat aus einem anderen geeigneten Kunststoff eingesetzt werden , so u.a. auch Polymere.

Die Wand des Behälters 10 besteht aus Kunststoff, zweckmässigerweise aus PVC oder einem anderweitigen, wärmeleitenden Material, wie Stahlblech, welches innenwandseitig mit einem Kunststoff, zweckmäßigerweise mit PVC, beschichtet ist. Durch das Zusammenwirken der Kunststoffanteile der eingesetzten Mischung mit der aus einem Kunststoff bestehenden Behälterwand wird die Wärmeerzeugung wesentlich verbessert. Überraschende Ergebnisse werden beim Einsatz einer Behälterwand aus einem Kunststoff erhalten, wenn in den Kunststoff ein Mercaptid, insbesondere ein Octyl-Zinn-Mercaptid, eingearbeitet ist, das retardartig über einen längeren Zeitraum an die im Behälter vorliegende Mischung während des Verwirbelungsvorganges abgegeben wird.

## Patentansprüche

1. Heizverfahren, insbesondere für Wohnungen, unter Verwendung einer aus einem Kunststoff und einem Stabilisator bestehenden pulver- oder granulatförmigen Mischung, die in einem Trockenmischer mit Luft verwirbelt wird, wobei die Außenwand des Mischers zur Ableitung von Wärme mit Wasser umspült wird, das in einem Heizkreislauf umläuft, dadurch gekennzeichnet, daß als Stabilisator für die Kunststoff-Teilchen, insbesondere PVC-Teilchen, ein Mercaptid verwendet wird und/oder die Verwirbelung in einem sich über einen waagerechten Bereich erstreckenden Verwirbelungsstrecke liegenden Behälter erfolgt.

2. Heizverfahren, insbesondere für Wohnungen, unter Vewendung einer aus einem Kunststoff und einem Stabilisator bestehenden pulver- oder granulatförmigen Mischung, die in einem Trockenmischer mit Luft verwirbelt wird, wobei die Außenwand des Mischers zur Ableitung von Wärme mit Wasser umspült wird, das in einem Heizkreislauf umläuft, dadurch gekennzeichnet, daß als Stabilisator für die Kunststoff-Teilchen, insbesondere PVC-Teilchen, ein Mercaptid verwendet wird und/oder die Verwirbelung in einem sich über einen waagerechten Bereich erstreckenden Verwirbelungsstrecke liegenden Behälter in dessen gesamten Innenraum durchgeführt wird.

3. Heizverfahren nach einem der Ansprüche 1 und 2, dadurch gekennzeichnet, daß das Mercaptid ein Octyl-Zinn-Mercaptid ist.

4. Heizverfahren nach einem der Ansprüche 1 bis 3, dadurch gekennzeichnet, daß die Verwirbelung in einem liegenden Zylinderbehälter (10) durchgeführt wird, in dem ein sich über den gesamten Berhälterinnenraum erstreckender Flügelmischer (20) relativ zur Behälterwand rotiert.

5. Heizverfahren nach Anspruch 4, dadurch gekennzeichnet, daß der Flügelmischer (20) mit einer Drehzahl von 1.450 bis 2.900 U/min rotiert.

6. Heizverfahren nach einem der Ansprüche 1 bis 5, dadurch gekennzeichnet, daß das kunststoff- bzw. PVC-haltige Material aus Abfall- und Altmaterial, wie gebrauchten Flaschen od.dgl., besteht.

7. Heizverfahren nach einem der Ansprüche 1 bis 6, dadurch gekennzeichnet, daß anderweitigem Kunststoffmaterial ein Anteil an PVC-haltigem Material bis zu 80 Gew.-% zugemischt wir.

8. Heizverfahren nach einem der Ansprüche 1 bis 7, dadurch gekennzeichnet, daß mit der Ableitung von Wärme die Temperatur des verwirbelten Materials auf ein 160^{o}C nicht überschreitendes, zweckmäßigerweise bei 150^{o} bis 160^{o} C liegendes Niveau begrenzt wird.

9. Heizverfahren nach einem der Ansprüche 1 bis 8, dadurch gekennzeichnet, daß die Verwirbelung in einem zylindrischen Behälter (10) vorgenommen wird, dessen Verhältnis vom Durchmesser D zur Länge l etwa 5:8 bis 5:9 beträgt, und der bis zu etwa 4/10 bis 6/10 der Höhe mit Material gefüllt wird.

10. Vorrichtung zur Durchführung des Verfahrens nach einem der Ansprüche 1 bis 9, bestehend aus einem doppelwandigen Behälter (10) mit einer im Behälterinnenraum (23) angeordneten Verwirbelungseinrichtung aus einem Flügelmischer (20), wobei im Zwischenraum der Doppelwandung (11,12) als Teil eines Heizkreislaufes Wasser geführt wird, dadurch gekennzeichnet, daß der vorzugsweise zylindrische Behälter (10) liegend angordnet ist und einen um eine horizontale Achse rotationsfähigen Flügelmischer (20) aufweist.

11. Vorrichtung zur Durchführung des Verfahrens nach einem der Ansprüche 1 bis 9, bestehend aus einem doppelwandigen Behälter (10) mit einer im Behälterinnenraum (23) angeordneten Verwirbelungseinrichtung aus einem Flügelmischer (20), wobei im Zwischenraum der Doppelwandung (11,12) als Teil eines Heizkreislaufes Wasser geführt wird, dadurch gekennzeichnet, daß der vorzugsweise zylindrische Behälter (10) liegend angeordnet ist und einen um eine horizontale Achse rotationsfähigen, sich über die gesamte Länge und über den gesamten Innenraum des Behälters (10) erstreckenden Flügelmischer (20) aufweist.

12. Vorrichtung nach einem der Ansprüche 10 und 11, dadurch gekennzeichnet, daß der Flügelmischer (20) auf einer horizontal angeordneten, motorbetriebenen Welle (18) befestigt ist.

13. Vorrichtung nach einem der Ansprüche 10 bis 12, dadurch gekennzeichnet, daß der Flügelmischer (20) aus mehreren, radial von der Welle abstehenden Armen (21) mit endseitigen Schaufelblechen (22) besteht.

14. Vorrichtung nach Anspruch 13, dadurch gekennzeichnet, da'die Schaufelbleche (22) gegenüber den Armen (21) um (30^{o} bzw. 60^{o}) ± 15^{o} geneigt sind.

15. Vorrichtung nach einem der Ansprüche 10 bis 14, dadurch gekennzeichnet, daß jedes der Schaufelbleche (22) sich im wesentlichen über die gesamte Innenraumlänge des Behälters (10) erstreckt und über mehrere, vorzugsweise drei, hintereinander angeordnete, radial von der Welle (18) abstehende Arme (21) gehalten wird.

16. Vorrichtung nach einem der Ansprüche 10 bis 15, dadurch gekennzeichnet, daß mindestens drei, vorzugsweise vier, Schaufelbleche (22) vorgesehen sind.

17. Vorrichtung nach einem der Ansprüche 10 bis 16, dadurch gekennzeichnet, daß der Behälter aus Kunststoff, zweckmäßigerweise aus PVC oder aus einem anderweitigen, wärmeleitenden Material, wie Stahlblech, besteht, das mit einer innenwandseitigen Beschichtung aus einem Kunststoff, zweckmäßigerweise PVC, versehen ist.

18. Vorrichtung nach Anspruch 17, dadurch gekennzeichnet, daß als Wand des Behälters (10) bzw. als Innenwandbeschichtung ein Kunststoff mit einem eingearbeiteten Mercaptid, insbesondere einem Octyl-Zinn-Mercaptid, bzw. eine Mischung aus einem Kunststoff, zweckmäßigerweise einem PVC, und aus einem Mercaptid, insbesondere einem Octyl-Zinn-Mercaptid, eingesetzt wird.
